# EUROPEAN PATENT SPECIFICATION

(11) **EP 4 242 547 B1**
(45) Date of publication and mention of the grant of the patent: **21.08.2024**
(21) Application number: 22161051.2
(22) Date of filing: 09.03.2022
(51) Int. Cl.: F24H 9/1863, F24H 3/04, H05B 3/06

(54) **ELECTRIC HEATING DEVICE**
ELEKTRISCHE HEIZVORRICHTUNG
DISPOSITIF DE CHAUFFAGE ÉLECTRIQUE

(43) Date of publication of application: 13.09.2023
(73) Proprietor: MAHLE International GmbH, 70376 Stuttgart (DE)
(72) Inventor: EDEL, Nicolas, 68360 Soultz-Haut-Rhin (FR); Hildenbrand, Mathieu, 68000 Colmar (DE); MAGNIER, Gilles, 90110 Rougemont-le-Chateau (FR); Salmon, Judie, 67200 Strasbourg (FR)
(74) Representative: BRP Renaud & Partner mbB Rechtsanwälte Patentanwälte Steuerberater

(56) References cited:
- EP-A1- 1 580 495
- EP-A1- 2 299 201
- EP-A1- 3 716 729
- FR-A1- 3 083 951

## Description

The present invention relates to an electrical heating device, in particular for a motor vehicle, which has at least two electrically operated heating modules spaced apart from one another and power electronics for supplying the heating modules. The invention further relates to a motor vehicle having such a heating device.

An electric heating device can be used to heat a fluid. Such an electrical heating device usually has a volume through which the fluid to be heated flows, which is also referred to as the heating volume in the following. Two or more heating modules are usually arranged in the heating volume. The respective heating module has at least one electrical heating element, for example a PTC element. When electrically supplied, the heating element generates heat and thus heats the fluid flowing through the heating volume. Such heating modules generally have an electrically conductive outer shell that encloses the at least one heating element. For electrical supply, the heater further usually comprises power electronics. The power electronics are usually accommodated in a volume that is fluidically separate from the heating volume, which is also referred to as the control volume in the following. Usually, the power electronics is accommodated in a housing which delimits the control volume and the heating volume. Such heating devices are known, for example, from EP 2 685 784 A1 and FR 3 075 552 A1.

Such a heating device is known from EP 3 493 650A1. The housing for accommodating the power electronics, hereinafter also referred to as the control housing, has a first housing part which delimits the heating volume. In a bottom of the first housing part, an opening is provided for the respective heating module, through which the heating module is inserted into the control volume. Further, the respective opening is sealed to fluidically separate the control volume from the heating volume. A conductor element is arranged in the control volume, which electrically connects the outer shells of the heating modules to one another so that they are at the same electrical potential.

EP 3 772 867 A1 discloses a heating device which comprises a conductor element is arranged in the control volume, which electrically connects the outer shells of the heating modules to one another so that they are at the same electrical potential. The conductor element for the respective heating module comprises a corresponding opening wherein contact tongues of the conductor element rest against the outer shells. The contact tongues project from openings of the conductor element, through which the heating modules are led.

Another heating device is disclosed in EP 1 580 495 A1.

The present invention is concerned with the problem of providing improved or at least other embodiments for an electric heating device of the type mentioned above and for a motor vehicle with such a heating device, which address disadvantages of solutions in the prior art. The present invention is in particular concerned with the problem of providing improved or at least other embodiments for the electric heating device and the motor vehicle which are characterized by increased operational safety and/or reduced operational malfunction and/or simplified manufacture of the heating device.

This problem is solved according to the invention by the objects of the independent claims. Advantageous embodiments are the subject of the dependent claims.

The present invention is based on the general idea to provide a conductor arrangement in an electric heating device for electrically connecting outer shells of heating modules to a housing for the reception of power electronics, such that the outer shells and the housing are at the same electrical potential, wherein the conductor arrangement comprises a rail form which arms project and are in contact with the outer shells. Thus, the conductor arrangement is designed in a simple manner and at the same time reliably connects the outer shells electrically to the housing and to each outer. Thus, the outer shells as well as the housing are in a simple and stable way connected to the same electrical potential, i.e. are equipotential. Therefore, the operational safety of the electric heating device is increased. The conductor arrangement further leads to a simple manufacture of the electric heating device. Moreover, the construction size of the conductor arrangement is reduced. The increased and improved electric contact further leads to a reduced disturbance in the operation of the electric heating device. In addition, an examination of the electrical conditions of one of the equipotentially connected components, in particular of the housing, can thus detect undesirable electrical currents and/or leakages of the electric heating device in a simple and reliable manner. This results in improved operational reliability.

In accordance with the idea of the invention, the electrical heating device has a volume through which a flow path of a fluid leads, whereby the fluid is heated during operation. This volume is hereinafter also referred to as the heating volume. The electric heating device is also simply denoted heating device in the following. In the heating volume, the heating device has at least two heating modules which are spaced apart from one another in a direction referred to as transverse direction hereinafter. In particular, the heating modules are arranged in the flow path. The respective heating module extends longitudinally in a direction that is also referred to hereinafter as the longitudinal direction. The respective heating module has at least one electrical heating element. The respective electrical heating element is such that it generates heat when electrically supplied. Thus, the fluid is heated by the heating modules during operation. The respective heating module has the electrically conductive outer shell. Advantageously, the outer shell is formed as a flat tube. The respective outer shell encloses the at least one heating element of the associated heating module. The direction transverse to the longitudinal direction and transverse to the transverse direction is also referred to as vertical direction in the following. The heating device further comprises an electrically conductive. The housing is hereinafter also referred to as the control housing. The housing delimits a volume. The volume delimited by the housing is also referred to as the control volume hereinafter. In the control volume, the heating device has power electronics. With the power electronics, the heating modules, in particular the heating elements, are electrically supplied during operation. The housing has a bottom which delimits the heating volume. The bottom of the housing has an opening for the respective heating module. These openings of the bottom are hereinafter also referred to as passage openings. The respective heating module penetrates into the control volume in the longitudinal direction through the associated passage opening. The respective heating module is inserted into the control volume in particular in the longitudinal direction through the associated passage opening. In the control volume, the heating modules are electrically connected to the power electronics, so that at least the heating elements are electrically supplied with the power electronics during operation. The heating device further has the electrically conductive conductor arrangement which electrically connects the respective outer shell to the first housing part. Conductor arrangement comprises the rail which runs in the transverse direction and is distanced to the outer shells. The rail is electrically and mechanically connected to the bottom. The conductor arrangement further, for the respective outer shell comprises at least one associated arm which protrudes from the rail and is electrically and mechanically connected to the associated outer shell.

Each outer shell has two walls opposite in the transverse direction, which are also referred to hereinafter as outer walls. Each outer shell has two walls opposite in a direction transverse to the longitudinal direction and transverse to the transverse direction which are also referred to as side walls in the following. The side walls of the outer shell might connect the outer walls to each other and vice versa.

In the respective passage opening, a sealing arrangement can fluidically seals the control volume from the heating volume.

The conductor arrangement is electrically connected to the respective outer shell for electrically connecting the respective outer shell to the housing.

In the present context, the term "conductor arrangement" refers to an arrangement comprising at least one electrically conductive conductor body.

In the present context, the term "sealing arrangement" refers to an arrangement comprising at least one sealing body.

Advantageously, the conductor arrangement is separate from the seal arrangement.

The control housing, in general, can be a one-part housing.

Preferably the control housing comprises an electrically conductive first housing part and an electrically conductive second housing part electrically connected to one another and delimiting the control volume. The housing parts are preferably detachably connected to each other. This simplifies the manufacture of the heating device and further allows access to the control volume if needed.

The first housing part might comprise the bottom. Thus the intermediate part is electrically and mechanically connected to the first housing part.

Preferably, the conductor arrangement is electrically connected to the bottom of the housing. Thus, the conductor arrangement electrically connects the respective outer shell to the bottom.

In preferred embodiments, the conductor arrangement is mechanically fixed, preferably fastened, to the housing, in particular to the bottom, and/or to the respective outer shell. Advantageously, the mechanical connection also provides an electrical connection.

It is preferred to fasten the conductor arrangement to the housing by means of screws and at the same time to connect it electrically to the housing.

Advantageously, the conductor arrangement is materially bonded to the respective outer shell. Preferably, the conductor arrangement is also electrically connected to the outer shells in this way. Preferably, the material connection is realized by a welding process, for example by laser welding.

The second housing part is favorably arranged on the side of the housing part facing away from the heating volume. In particular, the second housing part is arranged on the side of the first housing part facing away from the heating volume in the longitudinal direction.

Advantageously, the respective sealing arrangement also electrically insulates the outer shell from the first housing parts.

The sealing arrangement is advantageously arranged in the passage opening, preferably between the outer shell and the passage opening.

In preferred embodiments, the conductor arrangement is arranged in the heating volume. This means that the conductor arrangement is arranged at least partially, preferably entirely, outside the control volume and in the heating volume. The conductor arrangement is also preferably electrically connected in the heating volume to the bottom of the first housing part. The conductor arrangement is thus arranged on the side of the bottom facing away from the control volume and is electrically connected to the bottom. In this way, electrical influences of the conductor arrangement on the power electronics are prevented or at least reduced. Thus, corresponding disturbances in the operation of the heating device are prevented or at least reduced.

Particularly preferred are embodiments in which the conductor arrangement is formed as one conductor body. This means that the conductor arrangement has a single, continuous conductor body. The conductor body is advantageously electrically and mechanically connected to the respective outer shell and to the base. The result is a simple integration of the conductor arrangement as well as a simple and reliable electrical connection of the outer shells to the first housing part.

The conductor body is single piece and continuous, as described above. In particular, the conductor body is one-piece and monolithic. Advantageously, the conductor body is made of an electrically conductive flat material, for example a sheet metal.

Preferably, the rail lies flat on the bottom. The rail extends advantageously longitudinally in the transverse direction. Advantageously, the rail is fastened to the bottom with at least one screw.

The rail is preferably spaced from the passage openings.

Preferably, the conductor arrangement has an associated arm for the respective outer shell. The respective arm is electrically and mechanically connected to the associated outer shell. In this way, a simplified integration of the conductor arrangement in the heating device is achieved. In addition, the influence of the conductor arrangement on the flow of the fluid in the heating volume is thus minimized or at least reduced.

Preferably, the mechanical and electrical connection of the respective arm to the associated outer shell is made by welding, in particular by laser welding or friction welding. As an alternative or in addition, the respective arm can be mechanically and electrically connected of the associated outer shell by means of an electrically conductive adhesive, in particular by adhesive silicone.

As an alternative or additionally, at least one of the arms, preferably each arm, is coated with a friction-resistant and conductive material on its side facing the corresponding outer shell. This leads to a more stable contact between the arm and the outer shell resulting in a more stable electric contact. Therefore, the operational safety is increased.

The friction-resistant and conductive coating can in general be of any material. Preferably, the friction-resistant and conductive material is silver. That is, at least one of the arms is preferably coated with silver on its side facing the corresponding outer shell to increase friction.

In preferred embodiments, at least one of the arms, preferably each arm, is designed as a spring element which is mechanically loaded against the associated outer shell. This leads to a more stable contact between the arm and corresponding the outer shell resulting in a more stable electric contact. Therefore, the operational safety is increased. Moreover, this simplifies the manufacture of the heating device.

In advantageous embodiments, at least one arm protrudes from the rail in the longitudinal direction. As a result, a planar electrical connection of the conductor arrangement to the outer shells and, moreover, a simple mechanical connection to the bottom is realized.

In preferred embodiments, at least one of the arms, advantageously the respective arm, is disposed on a side wall of the associated outer shell in a vertical direction transverse to the longitudinal direction and transverse to the transverse direction.

Preferably, the arm is at least partially in contact with the side wall. In this case, the arm is electrically and advantageously also mechanically connected to the associated side wall. Thus, the influence of the arm and consequently of the conductor arrangement on the flow of the fluid in the heating volume is minimized or at least reduced.

Advantageously, the arm is at most as large as the side wall in the transverse direction. This means that the arm does not project beyond the associated side wall in the transverse direction. Thus, with a reliable electrical connection to the outer shell, the influence on the flow of the fluid is prevented or at least reduced.

Preferably, at least one of the arms, advantageously the respective arm, has a shape complementary to the associated side wall. The complementary shape is advantageously such that the arm lies flat on the side wall.

Favorably, the arm is smaller in the longitudinal direction than the outer shell. In particular, the arm extends in the longitudinal direction over only a partial section, for example over a maximum of 5 percent or 10 percent, of the side wall.

The side wall can have a protruding section in the vertical direction, which is also referred to as a fillet hereinafter. The fillet extends in the longitudinal direction. Advantageously, the associated arm has a formation complementary to the fillet. The formation is such that the fillet engages in the shaping.

The forming can be introduced before the arm is connected to the side wall. It is likewise conceivable that the forming is introduced into the arm by pressing the arm against the side wall.

In advantageous embodiments, the conductor arrangement has at least one lug element that mechanically presses at least one of the arms against the associated outer shell, in particular against the associated side wall. That is, the lug element mechanically loads at least one of the arms against the associated side wall. Thus, a defined and reliable connection between the arm and the outer shell is achieved.

Preferably, the conductor arrangement has two such lug elements spaced apart from each other along the extension of the rail, preferably in the transverse direction. Thus, it is possible to load two or more arms in the direction of the associated outer shells.

Advantageously, the at least one lug element protrudes from the rail transversely or at an angle to the at least one arm.

Advantageously, the at least one lug element rests on the bottom so that it mechanically loads the at least one arm in the direction of the associated outer shell.

In preferred embodiments, the conductor arrangement has at least one associated arm for at least one of the outer walls, preferably for the respective outer wall. The respective arm protrudes in the direction of one of the outer walls of the associated outer wall, this outer wall also being referred to hereinafter as the associated outer wall of the arm. The respective arm thereby rests on the associated outer wall and mechanically loads the outer wall in the transverse direction. This results in a mechanically and electrically reliable connection between the outer shell and the arm. This results in a stable and robust electrical and mechanical connection between the conductor arrangement and the outer shell.

Preferably, the conductor arrangement has at least one such arm for the respective outer wall.

Advantageous are embodiments in which the conductor arrangement has at least one such arm for each of the two outer walls. Thus, the respective outer wall is mechanically loaded in the direction of the other outer wall. The result is a reliable mechanical and electrical connection of the outer shell to the conductor arrangement. In addition, a connection between the conductor arrangement and the corresponding outer walls can be realized by simply sliding the outer wall between the arms.

In preferred embodiments, the at least one arm protrudes from the rail. This means that the rail can be used to fix the conductor arrangement to the bottom and the arms do not need to be attached to the outer shells. This leads to a simplified assembly of the heating device. In particular, the outer shells can be inserted through the associated arms in a simplified manner, as described above, or vice versa.

Advantageous are embodiments in which at least one arm, preferably the respective arm, has a section resting on the associated outer wall. This section is also referred to hereinafter as the support section. The arm also has a section connecting the support section to the rail, which is also referred to hereinafter as the connecting section. Preferably, the connecting section extends inclined to the transverse direction and in the direction of the associated outer wall, so that the connecting section mechanically loads the support section in the transverse direction against the associated outer wall. As a result, there is a stable electrical connection of the support section to the associated outer wall.

In principle, it is sufficient if the respective support section is mechanically loaded against the associated outer wall.

It is also conceivable to bond at least one of the support sections to the associated outer wall in an electrically conductive manner.

Improved mechanical loading of the support section against the associated side wall can be achieved by spacing the support section transversely to the longitudinal direction and transversely to the transverse direction of the rail. Thus, the associated connecting section also extends in the vertical direction. In this way, it is possible in particular to arrange the support section at a distance in the vertical direction from the passage opening associated with the outer wall. Thus, a counteraction of the conductor arrangement to the electrical insulation obtained by means of the sealing arrangement in the passage opening is prevented. In addition, the arms can be used to guide the heating modules into the passage openings in a targeted manner.

In advantageous embodiments, at least one of the arms, preferably the respective arm, has a tongue on the side of the support section facing away from the rail. The tongue is bent outwards with respect to the associated outer wall. The tongue enables simplified insertion of the outer shell between the arms associated with the outer shell.

The electrical connection of the two housing parts to each other can in principle be made in any way.

Advantageously, an electrical connection of the housing parts is realized by a support of the two housing parts. This means that the first housing part has a support surface on which a counter-support surface of the second housing part, also referred to as the counter-support surface hereinafter, rests. The support surface and the counter-support surface electrically connect the housing parts to each other. Preferably, the support surface and the counter-support surface are arranged transversely to the longitudinal direction on the outside, particularly preferably circumferentially.

Advantageous are embodiments in which one of the housing parts, for example the second housing part, has a longitudinally projecting and circumferential shoulder. The other housing part, for example the first housing part, has a longitudinally open and circumferential receptacle associated with the shoulder. The shoulder and the receptacle engage in one another in the manner of a tongue-and-groove connection. In this way, in addition to a defined positioning of the housing parts, a reliable electrical connection is also achieved, for example via the support surface and the counter-support surface.

Advantageously, the support surface and the counter-support surface are arranged on the side of the shoulder and the receptacle facing away from the control volume.

In preferred embodiments, the receptacle is filled with an adhesive sealing compound. This means that the free volume of the receptacle is filled with the sealing compound. The sealing compound is thus arranged in particular between the shoulder and the receptacle. The sealing compound provides a simple and reliable fluidic seal of the control volume to the outside.

In principle, the sealing compound can be of any design. In particular, the adhesive sealing compound can be a silicone compound.

In advantageous embodiments, the housing parts are electrically and mechanically connected to each other by means of at least two connections. The connections are favorably separate from the support surfaces and/or the tongue-and-groove connection. Preferably, the connections are circumferentially spaced apart and arranged outside the control volume. Particularly preferably, the respective connection is electrically conductive.

In principle, the respective connection can be designed in any way.

It is preferred that at least one of the connections, preferably the respective connection, has a spring closure. In particular, at least one of the connections is designed as a spring closure. The spring closure has a base extending between the housing parts. From the base, an associated bend is bent over for the respective housing part. The respective bend engages in the associated housing part and presses the housing parts against each other in the longitudinal direction. In this way, a simple mechanical connection and also an improved electrical connection between the housing parts is achieved.

It is also preferred to design at least one of the connections as a screw connection.

The heating device advantageously has at least one structure in the heating volume which increases the heat-transferring surface. The structure has an undulating course and is also known to the person skilled in the art as a corrugated rib.

Preferably, such a corrugated rib is arranged between at least two successive heating modules. The fluid can flow through the corrugated rib. This means that the flow path leads through the corrugated rib. The corrugated rib is connected to the outer shells of the two heating modules in a heat-transferring manner. Advantageously, the respective corrugated rib is further electrically conductively connected to at least one of the associated outer shells. As a consequence, the at least one corrugated rib is also electrically connected to the conductor arrangement via the outer shell. Thus, the corrugated rib is also at the same electrical potential as the outer shells and the control housing.

Preferably, the common potential corresponds to an electrical ground. For this purpose, at least one of the equipotentially connected components, i.e. at least one of the housing parts, the conductor arrangement or at least one of the outer shells, or at least one of the corrugated ribs, is electrically connected to an electrical ground, for example an associated application. Particularly preferably, only one of said components is electrically connected to the electrical ground. Advantageously, one of the housing components is electrically connected to the electrical ground.

The heater can be used in any application to heat a fluid.

The heating device is used in particular in a motor vehicle to heat a fluid, for example air.

Advantageously, the control housing is electrically connected to the electrical ground of the motor vehicle. Particularly preferably, the first housing part is electrically connected to the electrical ground of the motor vehicle. For this purpose, an electrical plug or plug socket is preferably provided on the first housing part.

Further important features and advantages of the invention are apparent from the dependent claims, from the drawings, and from the accompanying figure description based on the drawings.

It is understood that the above features and those to be explained hereinafter can be used not only in the combination indicated in each case, but also in other combinations or on their own, without leaving from the scope of the present invention.

Preferred embodiments of the invention are shown in the drawings and will be explained in more detail in the following description, wherein identical reference signs refer to identical or similar or functionally identical components.

The Figures show, in each case schematically
- Fig. 1: an isometric view of an electric heating device,
- Fig. 2: a highly simplified, schematic diagram of a motor vehicle with the heating device,
- Fig. 3: a longitudinal section through the heating device in the area of a heating module,
- Fig. 4: an isometric view of the heater in the direction of a bottom of a housing part of the heater,
- Fig. 5: a top view of a part of the heating device,
- Fig. 6: a section through a control housing of the heating device,
- Fig. 7: an enlarged view of the area labeled VII in Fig. 6,
- Fig. 8: an isometric view of a portion of the control housing in another exemplary embodiment,
- Fig. 9: a top view of the heating device in a further exemplary embodiment,
- Fig. 10: an isometric view of a portion of the heating device toward a first housing portion in another embodiment,
- Fig. 11: a section through the heating device of Fig. 10
- Fig. 12: an enlarged view of the area labeled XII in Fig. 11,
- Fig. 13: an isometric view of the conductor arrangement of the heating device in Fig. 10,
- Fig. 14 and 15: an isometric view of the heating device during an assembly step of the heating device of another exemplary embodiment, respectively.

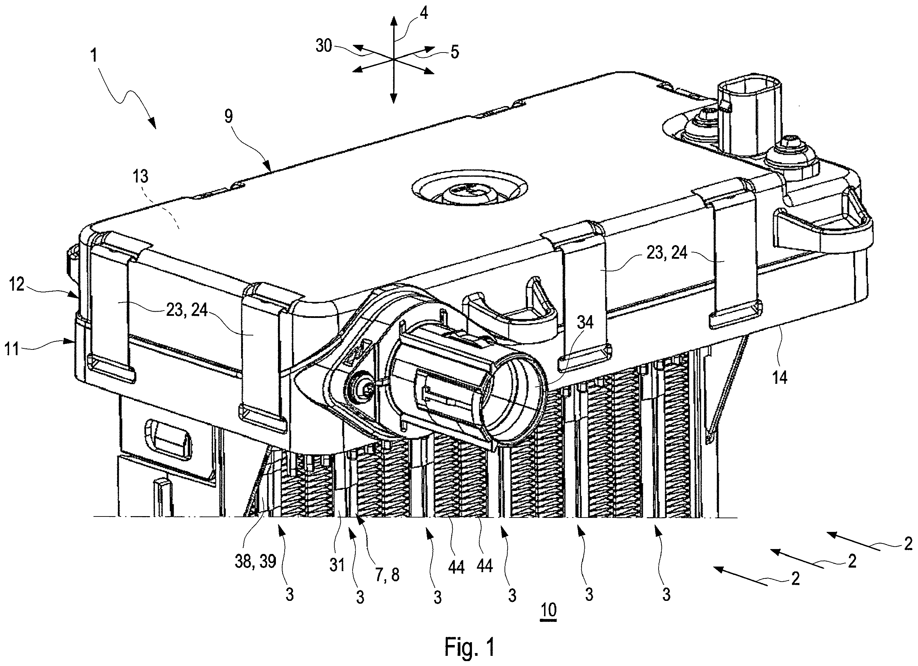

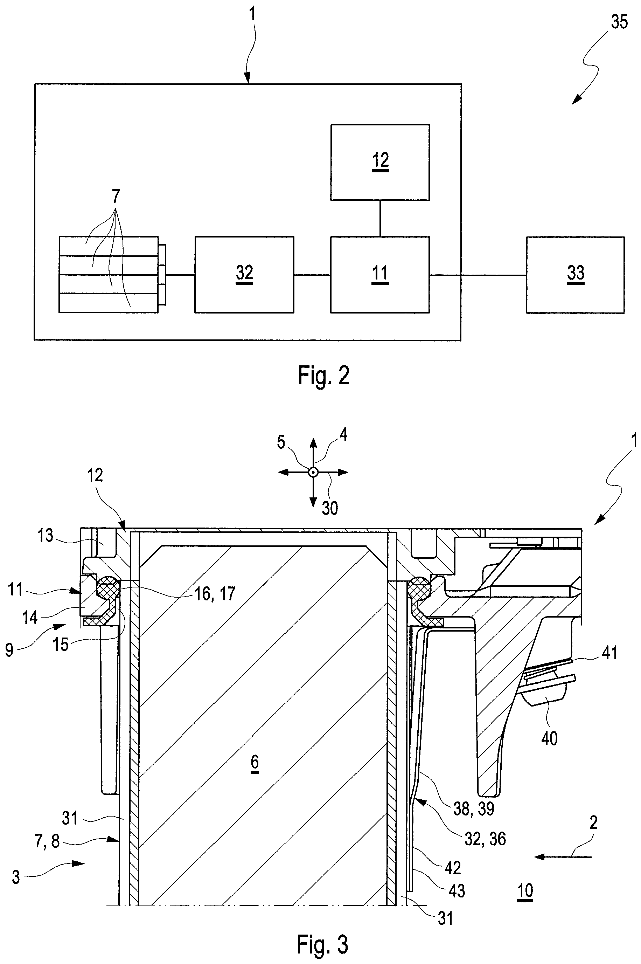

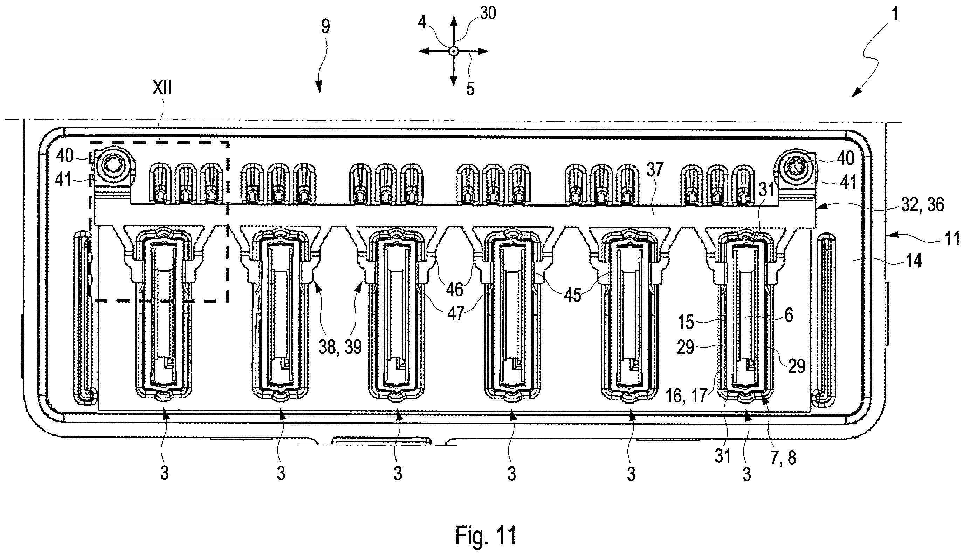

An electric heating device 1, as shown for example in Figures 1 to 15, is used for heating a fluid. For this purpose, a flow path 2 of the fluid (see Figure 1) leads through the electric heating device 1. The electric heating device 1 is also simply denoted heating device 1 in the following. At least two heating modules 3 of the heating device 1 are arranged in the flow path 2. The respective heating module 3 extends longitudinally in a longitudinal direction 4. The heating modules 3 are spaced apart from one another in a transverse direction 5 extending transversely to the longitudinal direction 4. The respective heating module 3 has at least one heating element 6 (see for instance Figure 3). The heating element 6 is designed in such a way that it generates heat when electrically supplied during operation. As a result, the fluid is heated. The respective heating element 6 is designed, for example, as a PTC element, where PTC stands for "Positive Temperature Coefficient". The respective heating module 3 further comprises an electrically conductive outer shell 7, which encloses the at least one heating element 6. In the exemplary embodiments shown, the respective outer shell 7 is formed as a flat tube 8. As can be seen, for example, from Figure 1, the heating device 1 further comprises a housing 9, which is hereinafter referred to as the control housing 9. The control housing 9 is adjacent to a volume 10 through which the flow path 2 passes. The volume 10 is also referred to hereinafter as the heating volume 10. The control housing 9, in the exemplary embodiments shown, has a first housing part 11 and a second housing part 12. The first housing part 11 and the second housing part 12 delimit a volume 13 in the control housing 9 (see for instance Figure 3), which is also referred to hereinafter as control volume 13. Power electronics (not shown) are arranged in the control volume 13, with which the respective heating module 3, in particular the heating elements 6, are electrically supplied. The housing parts 11, 12 are each electrically conductive. The first housing part 11 has a bottom 14 which delimits the heating volume 10 and thus separates it from the control volume 13. In the bottom 14, an associated opening 15 is provided for the respective heating module 3 (see in particular Figure 3). The respective opening 15 is also referred to hereinafter as the passage opening 15. The respective heating module 3 is inserted in longitudinal direction 4 through the associated passage opening 5 and thus enters the control volume 13. Within the control volume 13, the respective heating module 3 is further electrically connected to the power electronics (not shown) in order to electrically supply the heating elements 6. As can be seen in particular from Figure 3, a sealing arrangement 16 is arranged in the respective passage opening 15 between the outer shell 7 and the passage opening 15, which fluidically seals the control volume 13 from the heating volumes 10. Preferably, the sealing arrangement 16 further electrically isolates the outer shell 7 from the first housing part 11. In the exemplary embodiments shown, the respective sealing arrangement 16 has a single sealing body 17.

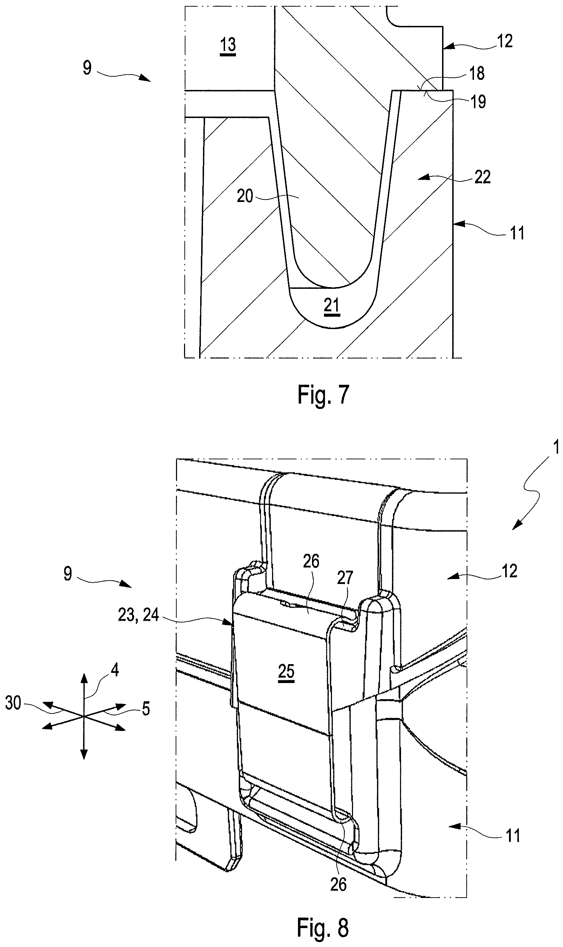

As can be seen, for example, from Figures 1, 7 and 8, the housing parts 11, 12 are electrically connected to one another. For this purpose, the respective housing part 11, 12 has an associated support surface 18, 19, the support surfaces 18, 19 resting on one another. That is, the first housing part 11 has a support surface 18 and the second housing part 12 has a support surface 19. The support surface 19 of the second housing part 12 is also referred to hereinafter as the counter-support surface 19 for better differentiation. As can be seen in particular from Figure 7, the support surface 18 rests on the counter-support surface 19. This results in an electrical connection between the housing parts 11, 12. As can be seen, for example, from Figures 1 and 7, the support surface 18 and the counter-support surface 19 of the exemplary embodiments shown are each on the outside and circumferentially transverse to the longitudinal direction 4. Support surface 18 and counter-support surface 19 are thereby arranged outside the control volume 13 transversely to the longitudinal direction 4 and extend circumferentially.

As can be seen from Figure 7, in the exemplary embodiments shown, one of the housing parts 11, 12 has a shoulder 20 projecting in the longitudinal direction 4 and the other housing part 11, 12 has an associated receptacle 21, which engage in one another in the manner of a tongue-and-groove connection 22. In the exemplary embodiments shown, the first housing part 11 has the receptacle 21 and the second housing part 12 has the shoulder 20. The shoulder 20 and the receptacle 21 are circumferential. As can further be seen from Figure 7, the shoulder 20 and the receptacle 21 are arranged on the side of the support surface 18 and the counter-support surface 19 facing the control volume 13. As can also be seen from Figure 7, the receptacle 21 is not completely filled with the shoulder 20. The receptacle 21 is filled, in particular before insertion of the shoulder 20, with an adhesive sealing compound, for example a silicone compound, which is not shown. This seals the control volume 13 from the outside.

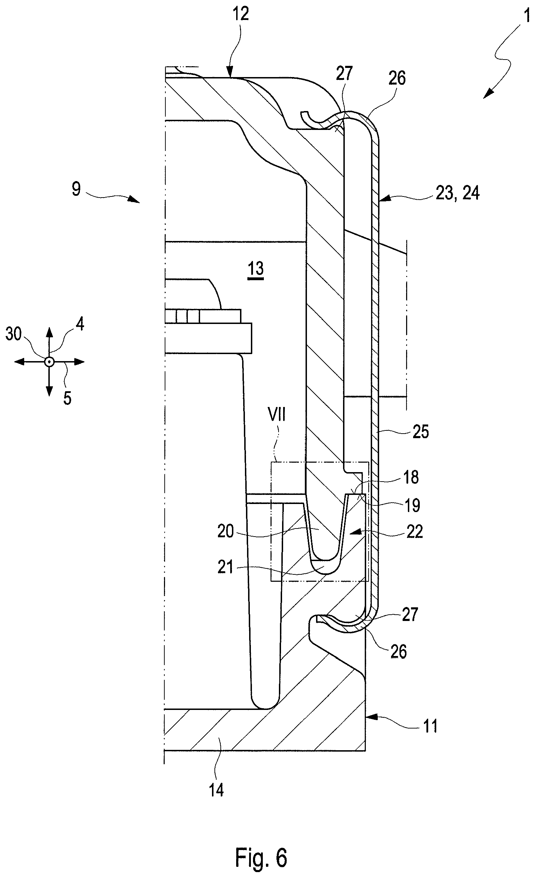

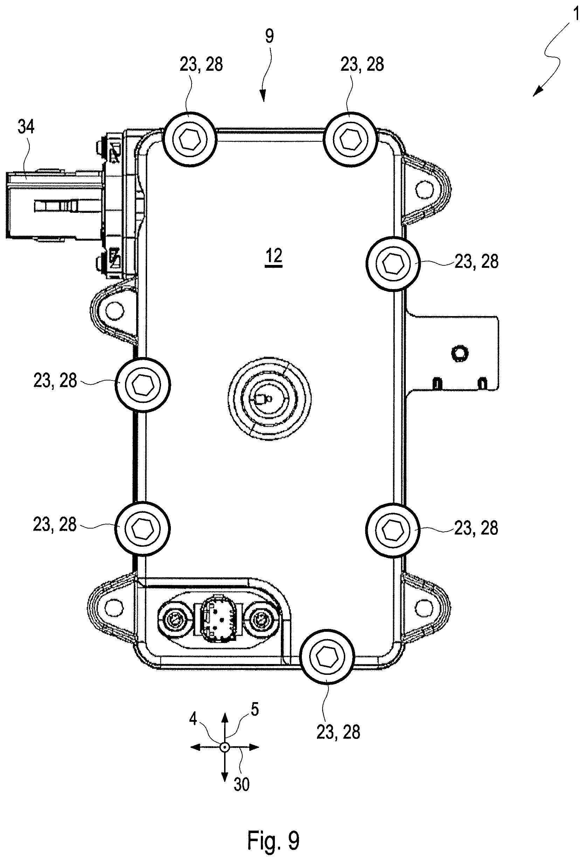

According to Figures 1 and 6 and 7, a further electrical connection of the housing parts 11, 12 in the exemplary embodiments shown is made by a mechanical connection 23 of the housing parts 11, 12 to one another. As can be seen from Figures 1 and 9, two or more such connections 23 are provided, which are arranged circumferentially spaced apart from one another. In the embodiments of Figures 1 to 8, the respective connection 23 is formed by an electrically conductive spring closure 24. The spring closure 24 has a base 25, from each end of which a bend 26 is bent over, one of the bends 26 engaging in the first housing part 11 and the other bend 26 engaging in the second housing part 12. Thus, the housing parts 11, 12 are mechanically loaded against each other along the spring closure 24. As can be seen, for example, from Figure 6, the respective housing part 11, 12 has a bead 27 for the respective associated bend 26, so that the bends 26 are secured to the respective associated housing part 11, 12. As can also be seen from Figure 6, the respective base 25 of the exemplary embodiments shown extends in the longitudinal direction 4.

In the exemplary embodiment of Figures 1 to 6, the respective bend 26 associated with the second housing part 12 engages externally in the second housing part 12 in the longitudinal direction 4. The embodiment example shown in Figure 8 differs from this in that the bends 26 associated with the second housing part 12 engage in the second housing part 12 offset in the longitudinal direction 4 towards the first housing part 11.

The exemplary embodiment shown in Figure 9 differs from the embodiment examples shown in Figures 1 to 8 in that the respective connection 23 is formed by an indicated screw connection 28.

The respective outer shell 7 has two opposing outer walls 29 in the transverse direction 5. In addition, the respective outer shell 7 has two opposing side walls 31 in a vertical direction 30 extending transversely to the longitudinal direction 4 and transversely to the transverse direction 5. The side walls 31 connect the outer walls 29 to each other and vice versa.

As can be seen in particular from Figures 1 to 5 and 10 to 15, the heating device 1 has an electrically conductive conductor arrangement 32. The conductor arrangement 32 is separate from the sealing arrangements 16. The conductor arrangement 32 electrically connects the respective outer shell 7 to the first housing part 11. Thus, the outer shells 7 are electrically connected to the first housing part 11 and to each other. In addition, the outer shells 7 are electrically connected to the second housing portion 12. As a consequence, the outer shells 7 and the housing parts 11, 12 are connected to the same electrical potential. As can be seen from Figure 2, the electrical potential is a ground 33. To this end, the heating device 1 is electrically connected to a corresponding ground 33. In the exemplary embodiment shown in Figure 2, this is done by electrically connecting the first housing part 11 to the ground 33. For this purpose, a corresponding electrical plug socket 34 can be provided on the first housing part 11, as can be seen in Figure 1. In the exemplary embodiment shown in Figure 2, the heating device 1 is used in a motor vehicle 35, which is not otherwise shown. The first housing part 11 is electrically connected to the electrical ground 33 of the motor vehicle 35.

In the exemplary embodiments shown, the conductor arrangement 32 is disposed outside of the control volume 13 and within the heating volume 10. In the exemplary embodiments shown, the conductor arrangement 32 comprises a single, electrically conductive, one piece as well as monolithic conductor body 36. The conductor body 36 is made of an electrically conductive flat material, such as a sheet metal. In the exemplary embodiments shown, the conductor arrangement 32 is electrically connected to the bottom 14 of the first housing portion 11.

In conductor arrangement 32 has a rail 37 extending longitudinally in the transverse direction 5. The rail 37 abuts the bottom 14 at a distance from the passage openings 15 in the vertical direction 30 and is electrically connected to the bottom 14. The conductor arrangement 32 has an associated arm 38 for the respective outer shell 7. The respective arm 38 protrudes from the rail 37. The respective arm 38, in the exemplary embodiments shown, is designed as spring element 39 which is mechanically loaded against the associated outer shell 7.

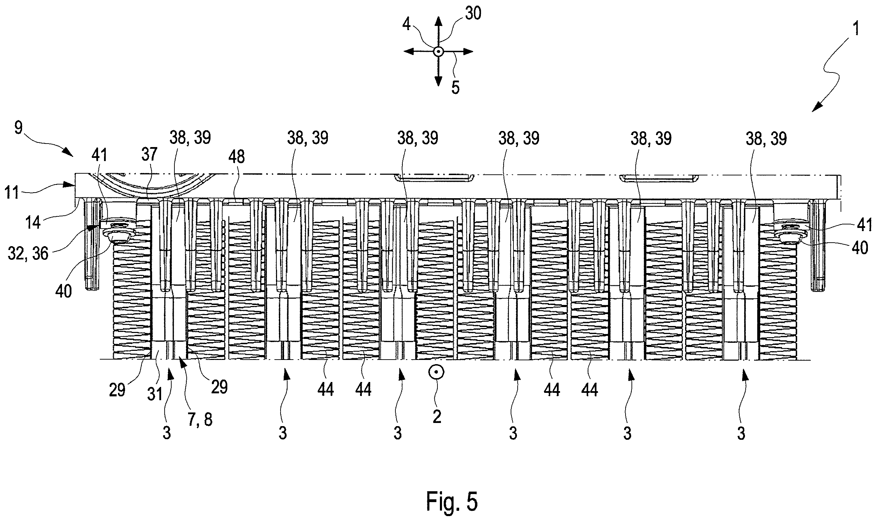

As can be seen, for example, from Figure 5, the conductor arrangement 32 in the exemplary embodiments shown is screwed into the bottom 14 by means of two electrically conductive screws 40 arranged on the outside in the transverse direction 5. For this purpose, the conductor arrangement 32 of the shown embodiments has a screw section 41 for the respective screw 40, through which the screw 40 is screwed. The screw sections 41 are arranged on the outside in the transverse direction 5 and project from the rail 37 in the vertical direction 30 on the side facing away from the arms 38.

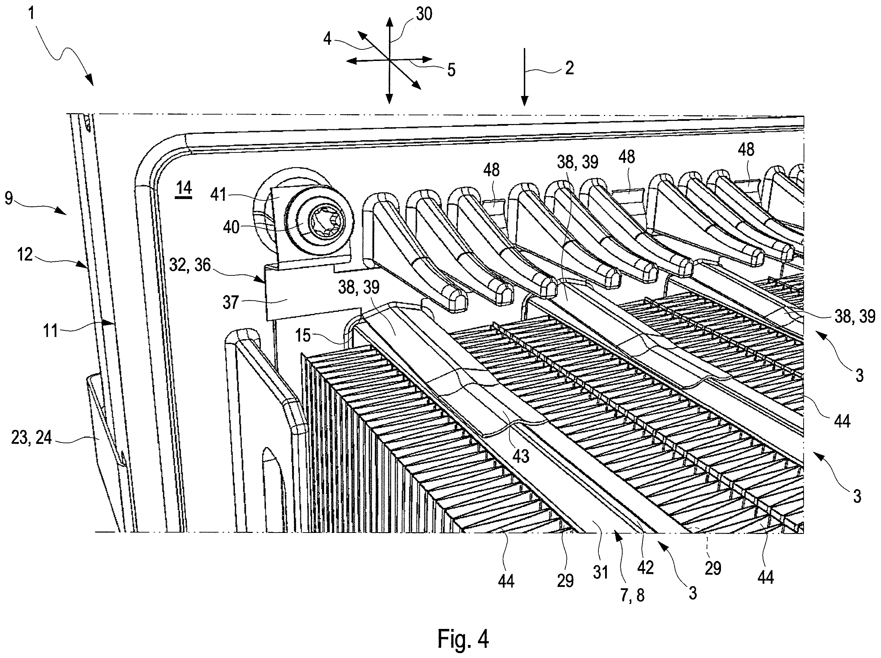

In the exemplary embodiment shown in Figures 3 to 5, the respective arm 38 extends inclined with respect to the longitudinal direction 4 towards a side wall 31 of the associated outer shell 7, with the respective arm 38 resting in a planar manner on the associated side wall 31 and thus being electrically connected to the side wall 31. In addition, the respective arm 38 is mechanically connected to the associated side wall 31. For this purpose, the respective arm 38 and the associated side wall 31 may be welded together, for instance by laser welding or friction welding. As an alternative, for this purpose, the respective arm 38 and the associated side wall 31 may be adhered by means of an electrically conductive adhesive such as conductive silicone. As can further be seen, for example, from Figure 4, the respective arm 38 is smaller in longitudinal direction 4 than the associated side wall 31. As can be seen from Figure 4, the respective arm 38 thereby extends in transverse direction 5 at most over the side wall 31. This means that the respective arm 38 is smaller in transverse direction 5 or at most as large as the associated side wall 31. Thus, the flow of the fluid through the heating volume 6 is not influenced or is influenced as little as possible by the arms 38. As is further indicated in Figure 4, the conductor arrangement 32 of the exemplary embodiment shown has at least one projecting lug element 48 on the side facing away from the arms 38 in the vertical direction 30. With the respective lug element 48, at least one of the arms 38 is mechanically loaded in the direction of the associated side wall 31. In the exemplary embodiment shown, the conductor arrangement 32 has a plurality of such lug elements 48, which are spaced apart from one another in the transverse direction 5. Thereby, the lug elements 48 are spaced apart from the arms 38 in the transverse direction 5 in the shown exemplary embodiment.

As can be seen, for example, from Figure 4, in the exemplary embodiment shown the respective side wall 31 associated with the arms 38 has a fillet 32 projecting outwards and extending in the longitudinal direction 4. In this case, the respective arm 38 has a formation 43 complementary to the associated fillet 42, such that the respective fillet 42 is received in the associated formation 43. Thus, electrical contact also occurs between the respective fillet 42 and the associated formation 43.

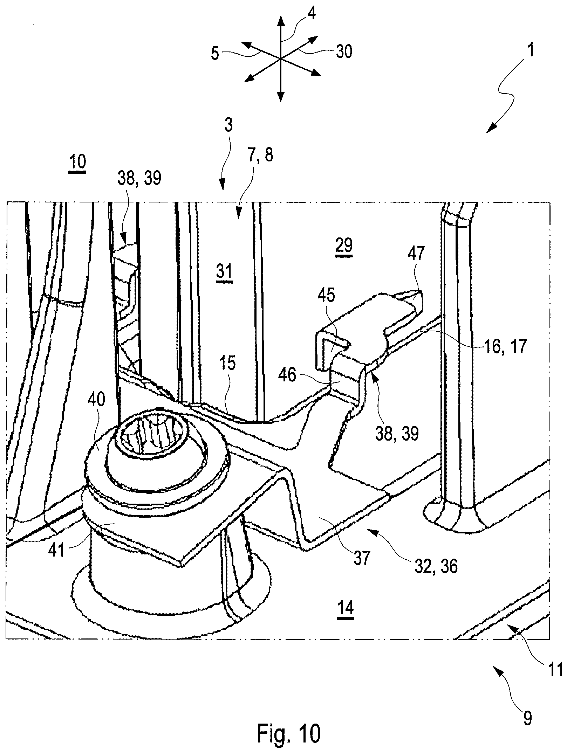

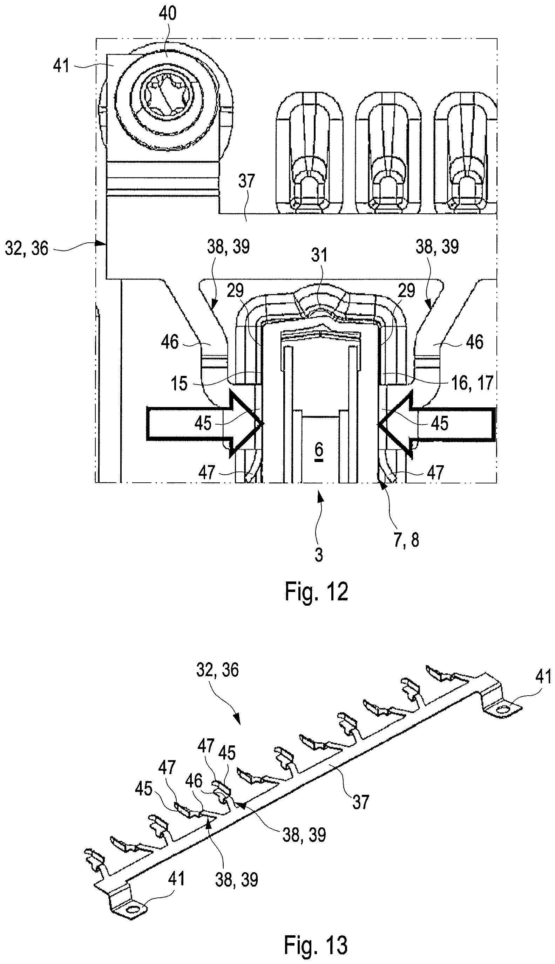

In the exemplary embodiments shown in Figures 10 to 15 the respective arm 38 is associated with one of the outer walls 29 of the associated outer shell 7. The respective arm 38 thereby protrudes from the rail 37 in the direction of the associated outer wall 29. In addition, the respective arm 38 rests on the associated outer wall 29 and is mechanically loaded, in particular pre-stressed, against the outer wall 29 in the transverse direction 5. In the exemplary embodiments shown in Figures 10 to 15, such an arm 38 is associated with the respective outer wall 29. The conductor arrangement 32 thus has two such arms 38 for the respective outer shell 7. As indicated by two arrows in Figure 12, the two arms 38 and thus spring elements 39 are thus mechanically loaded and pre-stressed in opposite directions in the transverse direction 5. This results in a simple and stable electrical connection of the spring elements 38 with the outer shell 7.

As can be seen, for example, from Figures 13 to 15, the respective arm 38 in the exemplary embodiments shown in Figures 10 to 15 has a section 45 which rests flat on the associated outer wall 29. This section 45 is also referred to hereinafter as the support section 45. In the exemplary embodiments shown in Figures 10 to 15, the respective arm 38 also has a section 46 which connects the support section 45 to the rail 37. This section 46 is also referred to hereinafter as the connecting section 46. The respective support section 45 extends in the longitudinal direction 4. The respective connecting section 46 extends inclined to the transverse direction 5 in the direction of the associated outer wall 29, so that by means of the connecting section 46 a mechanical pretension or load can be generated against the associated outer wall 29. In the exemplary embodiment shown in Figures 10 to 15, the respective support section 45 is spaced apart from the rail 37 in the longitudinal direction 4 and in the vertical direction 30. Thus, the associated connecting section 46 also extends in the vertical direction 30.

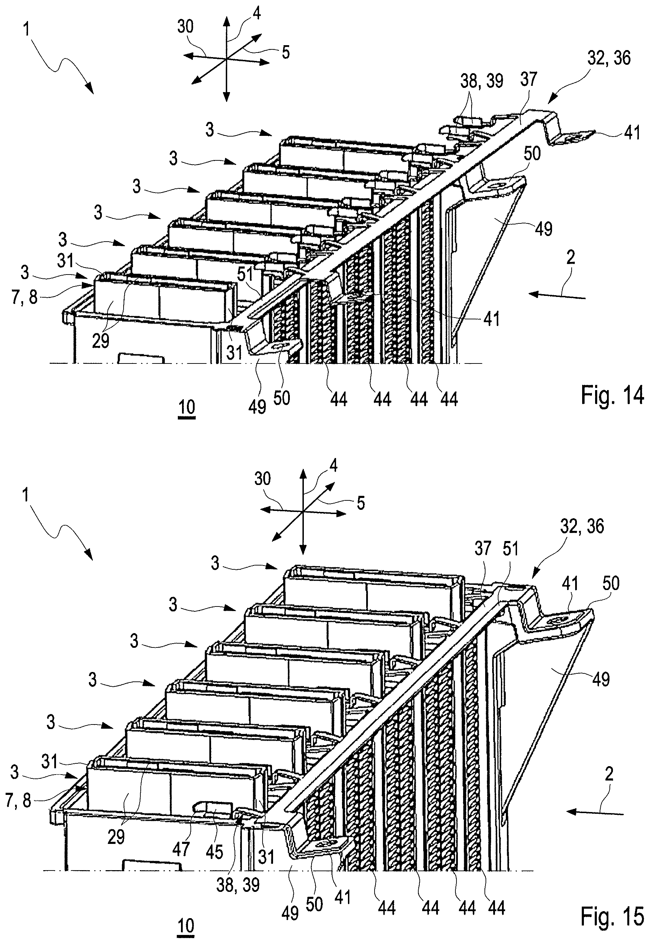

As can be seen in particular from Figure 12, the respective arm 38 in the exemplary embodiments shown in Figures 10 to 15 further comprises a tongue 47. The tongue 47 is arranged on the side of the associated support section 45 facing away from the rail 37, and thus on the side of the support section 45 facing away from the rail 37 in the vertical direction 30, and projects from the support section 45. The respective tongue 47 is shaped outwardly with respect to the associated outer wall 29. Thus, as indicated in particular in figures 14 and 15, the electrical and mechanical connection between the arms 38 and the associated outer shells 7 can be established in a simple manner by sliding the outer shells 7 with the outer walls 29 between the associated arms 38. In this regard, as shown in Figures 14 and 15, after arranging the heating modules 3 in the heating device 1, the conductor arrangement 32 can be attached and electrically connected to the outer walls 7 by moving it relative to the heating modules 3 in the vertical direction 30 and in the longitudinal direction 4.

The exemplary embodiment shown in Figures 14 and 15 differs from the exemplary embodiment shown in Figures 10 to 13 in that the screw sections 41 of the conductor arrangement 32 are arranged on a rib 49 spaced from the control housing 9 and arranged in the heating volume 10 and are screwed thereto, wherein neither the control housing 9 nor the screws 40 are shown in Figures 14 and 15. In this exemplary embodiment, the rail 37 may lie flat against the bottom 14, and in particular may be clamped between the bottom 14 and a step 50 of the respective rib 49. In the exemplary embodiment shown, the steps 50 are connected to each other by a ledge 51 extending in the transverse direction 5. In this case, the rail 37 also rests on the ledge 51.

In principle, it is sufficient if the support sections 45 are mechanically loaded against the associated outer walls 29, as described. It is also conceivable to bond at least one of the support sections 45 to the associated outer wall 29 in an electrically conductive manner.

As can be seen, for example, from Figure 4, the heating device 1 of the exemplary embodiments shown has an undulating corrugated rib 44 on the outer wall 29 of the respective outer shell 7 through which fluid can flow. Thus, a corrugated rib 44 is arranged between each of the facing outer walls 29 of the heating modules 3. In addition, in the exemplary embodiments shown, a corrugated rib 44 is also arranged in each case on the outermost outer walls 29 in the transverse direction 5. The respective corrugated rib 44 is connected to the at least one associated outer wall 29 in a heat-transferring manner. Preferably, the respective corrugated rib 44 is electrically conductive and mechanically connected to the respective associated outer wall 29. Thus, the respective corrugated rib 44 is also connected at the same electrical potential as the outer shells 7 and the control housing 9 and thus at equipotential.

The equipotential connection of the outer shells 7, the housing parts 11, 12 and, as the case may be, the corrugated ribs 44, makes it possible, in particular, to detect undesirable electrical currents and leaks within the heating device 1 easily and reliably, for example by connecting them to an electrical ground 33. Thus, the operational safety is increased. In addition, a disturbance of the power electronics is reduced. Furthermore, arranging the conductor arrangement 32 outside the control volume 13 and in the heating volume 10 leads avoids disturbances of the power electronics or at least reduces such disturbances.

## Claims

1. Electric heating device (1), in particular for a motor vehicle (35),
- with a heating volume (10) through which a flow path (2) of a fluid leads,
- wherein at least two spaced heating modules (3) are arranged in the heating volume (10), which extend in a longitudinal direction (4) and are spaced apart from one another in a transverse direction (5) extending transversely to the longitudinal direction (4),
- wherein the respective heating module (3) comprises at least one electrical heating element (6) which generates heat when electrically supplied so that the heating module (3) heats the fluid,
- wherein the respective heating module (3) has an electrically conductive outer shell (7), in particular an electrically conductive flat tube (8), which encloses the at least one heating element (6),
- wherein each outer shell (7) has two opposite outer walls (29) in the transverse direction (5) and two opposing side walls (31) in a vertical direction (30) extending transversely to the longitudinal direction (4) and transversely to the transverse direction (5),
- with a housing (9), which delimits a control volume (13)
- wherein the housing (9) has a bottom (14) which delimits the heating volume (10),
- wherein the bottom (14) for the respective heating module (3) has a passage opening (15) through which the heating module (3) penetrates into the control volume (13) in the longitudinal direction (4),
- wherein the heating device (1) has an electrically conductive conductor
arrangement (32) with a rail (37) which runs in the transverse direction (5), **characterized**
- **in that** the housing is an electrically conductive control housing (9),
- **in that** power electronics for electrically supplying the heating modules (3) are arranged in the control volume (13),
- **in that** the heating modules (3) in the control volume (13) are electrically connected to the power electronics,
- **in that** the electrically conductive conductor arrangement (32) electrically connects the respective outer shell (7) to housing (9),
- **in that** the rail (37) is distanced to the outer shells (7),
- **in that** the rail (37) is electrically and mechanically connected to the bottom (14),
- **in that** the conductor arrangement (32), for the respective outer shell (7) comprises at least one associated arm (38) which protrudes from the rail and is electrically and mechanically connected to the associated outer shell (7).

2. Heating device according to claim 1,
**characterized**
**in that** at least one of the arms (38) is designed as a spring element (39) which is mechanically loaded against the associated outer shell (7).

3. Heating device according to claim 1 or 2,
**characterized**
**in that** at least one of the arms (38) is arranged, in particular bears, on an associated outer side wall (31) of the outer shell (7) and is electrically connected to the side wall (31).

4. Heating device according to claim 3,
**characterized**
**in that** the side wall (31) has a fillet (42) projecting in the vertical direction (30) and extending in the longitudinal direction (4), and in that the arm (38) has a formation (43) complementary to the fillet (42), so that the fillet (42) engages in the formation (43).

5. Heating device according to any of claims 1 to 4,
**characterized**
- **in that** at least one of the arms (38) has a support section (45) running in the longitudinal direction (4) and a connecting section (46) connecting the support section (45) to the rail (37),
- **in that** the support section (45) rests on an associated outer wall (29) of the corresponding outer shell (7),
- **in that** the connecting portion (46) extends inclined to the transverse direction (5) in the direction of the associated outer wall (29) and thus mechanically loads the supporting portion (45) in the transverse direction (5) against the associated outer wall (29).

6. Heating device according to claim 5,
**characterized**
**in that** the conductor arrangement (32) comprises one such arm (38) each for both outer walls (29) of at least one of the outer shells (7).

7. Heating device according to claim 5 or 6,
**characterized**
**in that** the support section (45) is spaced transversely to the longitudinal direction (4) and transversely to the transverse direction (5) from the rail (37).

8. Heating device according to any of claims 5 to 7,
**characterized**
**in that** at least one of the arms (38) has, on the side of the support section (45) facing away from the rail (37), a tongue (47) which is bent outwards with respect to the associated outer wall (29).

9. Heating device according to any of claims 1 to 8,
**characterized**
**in that** the conductor arrangement (32) is arranged in the heating volume (10) and electrically connects the respective outer shell (7) in the heating volume (10) to the bottom (14) for electrically connecting the respective outer shell (7) to the housing part (9).

10. Heating device according to any of claims 1 to 9,
**characterized**
**in that** in the respective passage opening (15) an insulating sealing arrangement (16) fluidically seals the control volume (13) with respect to the heating volume (10).

11. Heating device according to any of claims 1 to 10,
**characterized**
**in that** at least one of the arms (38) is coated with a friction-resistant and conductive material, in particular with silver, on its side facing the associated outer shell (7).

12. Heating device according to any of claims 1 to 11,
**characterized**
**in that** the conductor arrangement (32) comprises at least one lug element (48) which protrudes from the rail (37) and is mechanically loaded against the bottom (14), such that at least one of the at least one arms (38) is mechanically loaded against the associated outer shell (7).

13. Heating device according to any of the claims 1 to 12,
**characterized**
**in that** the conductor arrangement (32) is a one piece part, in particular a sheet-metal part.

14. Motor vehicle (35) with a heating device (1) according to any of the previous claims, wherein the control housing (9), in particular the first housing part (11), is arranged for being electrically connected to an electrical ground (33) of the motor vehicle (35).

## Patentansprüche

1. Elektrische Heizvorrichtung (1), insbesondere für ein Kraftfahrzeug (35),
- mit einem Heizvolumen (10), durch das ein Strömungspfad (2) eines Fluids führt,
- wobei im Heizvolumen (10) mindestens zwei beabstandete Heizmodule (3) angeordnet sind, die sich in einer Längsrichtung (4) erstrecken und in einer Querrichtung (5), die sich quer zur Längsrichtung (4) erstreckt, voneinander beabstandet sind,
- wobei das jeweilige Heizmodul (3) mindestens ein elektrisches Heizelement (6) umfasst, das Wärme erzeugt, wenn es elektrisch versorgt wird, sodass das Heizmodul (3) das Fluid erwärmt,
- wobei das jeweilige Heizmodul (3) eine elektrisch leitende Außenschale (7), insbesondere ein elektrisch leitendes Flachrohr (8), aufweist, welches das mindestens eine Heizelement (6) umschließt,
- wobei jede Außenschale (7) zwei gegenüberliegende Außenwände (29) in der Querrichtung (5) und zwei gegenüberliegende Seitenwände (31) in einer vertikalen Richtung (30) aufweist, die sich quer zur Längsrichtung (4) und quer zur Querrichtung (5) erstrecken,
- mit einem Gehäuse (9), das ein Steuervolumen (13) begrenzt
- wobei das Gehäuse (9) einen Boden (14) aufweist, der das Heizvolumen (10) begrenzt,
- wobei der Boden (14) für das jeweilige Heizmodul (3) eine Durchgangsöffnung (15) aufweist, durch welche das Heizmodul (3) in der Längsrichtung (4) in das Steuervolumen (13) eindringt,
- wobei die Heizvorrichtung (1) eine elektrisch leitende Leiteranordnung (32) mit einer Schiene (37) aufweist, die in der Querrichtung (5) verläuft,
**dadurch gekennzeichnet,**
**dass** das Gehäuse ein elektrisch leitendes Steuergehäuse (9) ist,
- **dass** eine Leistungselektronik zum elektrischen Versorgen der Heizmodule (3) im Steuervolumen (13) angeordnet ist,
- **dass** die Heizmodule (3) elektrisch mit der Leistungselektronik im Steuervolumen (13) verbunden sind,
**dass** die elektrisch leitende Leiteranordnung (32) die jeweilige Außenschale (7) mit dem Gehäuse (9) elektrisch verbindet,
- **dass** die Schiene (37) von den Außenschalen (7) distanziert ist,
**dass** die Schiene (37) elektrisch und mechanisch mit dem Boden (14) verbunden ist,
**dass** die Leiteranordnung (32) für die jeweilige Außenschale (7) mindestens einen zugeordneten Arm (38) umfasst, der aus der Schiene herausragt und elektrisch und mechanisch mit der zugeordneten Außenschale (7) verbunden ist.

2. Heizvorrichtung nach Anspruch 1,
**dadurch gekennzeichnet,**
**dass** mindestens einer der Arme (38) als Federelement (39) ausgebildet ist, das mechanisch gegen die zugeordnete Außenschale (7) beaufschlagt ist.

3. Heizvorrichtung nach Anspruch 1 oder 2,
**dadurch gekennzeichnet,**
**dass** mindestens einer der Arme (38) an einer zugeordneten äußeren Seitenwand (31) der Außenschale (7) angeordnet ist, insbesondere daran anliegt, und mit der Seitenwand (31) elektrisch verbunden ist.

4. Heizvorrichtung nach Anspruch 3,
**dadurch gekennzeichnet,**
**dass** die Seitenwand (31) eine in der vertikalen Richtung (30) vorstehende und sich in der Längsrichtung (4) erstreckende Rundung (42) aufweist und dadurch, dass der Arm (38) eine zur Rundung (42) ergänzende Ausformung (43) aufweist, sodass die Rundung (42) in die Ausformung (43) eingreift.

5. Heizvorrichtung nach einem der Ansprüche 1 bis 4,
**dadurch gekennzeichnet,**
- **dass** mindestens einer der Arme (38) einen in der Längsrichtung (4) verlaufenden Stützabschnitt (45) und einen Verbindungsabschnitt (46) aufweist, der den Stützabschnitt (45) mit der Schiene (37) verbindet,
**dass** der Stützabschnitt (45) auf einer zugeordneten Außenwand (29) der entsprechenden Außenschale (7) aufliegt,
- **dass** sich der Verbindungsabschnitt (46) geneigt zur Querrichtung (5) in Richtung der zugeordneten Außenwand (29) erstreckt und so den Stützabschnitt (45) in der Querrichtung (5) mechanisch gegen die zugeordnete Außenwand (29) beaufschlagt.

6. Heizvorrichtung nach Anspruch 5,
**dadurch gekennzeichnet,**
**dass** die Leiteranordnung (32) einen solchen Arm (38) jeweils für beide Außenwände (29) mindestens einer der Außenschalen (7) umfasst.

7. Heizvorrichtung nach Anspruch 5 oder 6,
**dadurch gekennzeichnet,**
**dass** der Stützabschnitt (45) quer zur Längsrichtung (4) und quer zur Querrichtung (5) von der Schiene (37) beabstandet ist.

8. Heizvorrichtung nach einem der Ansprüche 5 bis 7,
**dadurch gekennzeichnet,**
**dass** mindestens einer der Arme (38) auf der Seite des Stützabschnitts (45), die von der Schiene (37) abgewandt ist, eine Zunge (47) aufweist, die in Bezug auf die zugeordnete Außenwand (29) nach außen gebogen ist.

9. Heizvorrichtung nach einem der Ansprüche 1 bis 8,
**dadurch gekennzeichnet,**
**dass** die Leiteranordnung (32) im Heizvolumen (10) angeordnet ist und die jeweilige Außenschale (7) im Heizvolumen (10) mit dem Boden (14) elektrisch zur elektrischen Verbindung der jeweiligen Außenschale (7) mit dem Gehäuseteil (9) verbindet.

10. Heizvorrichtung nach einem der Ansprüche 1 bis 9,
**dadurch gekennzeichnet,**
**dass** in der jeweiligen Durchgangsöffnung (15) eine isolierende Dichtungsanordnung (16) das Steuervolumen (13) in Bezug auf das Heizvolumen (10) strömungstechnisch abdichtet.

11. Heizvorrichtung nach einem der Ansprüche 1 bis 10,
**dadurch gekennzeichnet,**
**dass** mindestens einer der Arme (38) auf seiner der zugeordneten Außenschale (7) zugewandten Seite mit einem reibungsbeständigen und leitenden Material, insbesondere mit Silber, beschichtet ist.

12. Heizvorrichtung nach einem der Ansprüche 1 bis 11,
**dadurch gekennzeichnet,**
**dass** die Leiteranordnung (32) mindestens ein Rastnasenelement (48) umfasst, das aus der Schiene (37) vorsteht und mechanisch gegen den Boden (14) beaufschlagt ist, sodass mindestens einer der mindestens einen Arme (38) mechanisch gegen die zugeordnete Außenschale (7) beaufschlagt ist.

13. Heizvorrichtung nach einem der Ansprüche 1 bis 12,
**dadurch gekennzeichnet,**
**dass** die Leiteranordnung (32) ein einteiliges Teil, insbesondere ein Metallblechteil, ist.

14. Kraftfahrzeug (35) mit einer Heizungsvorrichtung (1) nach einem der vorstehenden Ansprüche, wobei das Steuergehäuse (9), insbesondere der erste Gehäuseteil (11), angeordnet ist, um mit einer elektrischen Masse (33) des Kraftfahrzeugs (35) elektrisch verbunden zu sein.

## Revendications

1. Dispositif de chauffage électrique (1), en particulier pour un véhicule à moteur (35),
- avec un volume de chauffage (10) à travers lequel passe un trajet d'écoulement (2) d'un fluide,
- dans lequel au moins deux modules de chauffage espacés (3) sont agencés dans le volume de chauffage (10), qui s'étendent dans une direction longitudinale (4) et sont espacés l'un de l'autre dans une direction transversale (5) s'étendant transversalement à la direction longitudinale (4),
- dans lequel le module de chauffage (3) respectif comprend au moins un élément de chauffage électrique (6) qui génère de la chaleur lorsqu'il est alimenté électriquement de telle sorte que le module de chauffage (3) chauffe le fluide,
- dans lequel le module de chauffage (3) respectif présente une coque externe électriquement conductrice (7), en particulier un tube plat électriquement conducteur (8), qui entoure le au moins un élément de chauffage (6),
- dans lequel chaque coque externe (7) présente deux parois externes opposées (29) dans la direction transversale (5) et deux parois latérales opposées (31) dans une direction verticale (30) s'étendant transversalement à la direction longitudinale (4) et transversalement à la direction transversale (5),
- avec un boîtier (9), qui délimite un volume de commande (13)
- dans lequel le boîtier (9) présente un fond (14) qui délimite le volume de chauffage (10),
- dans lequel le fond (14) du module de chauffage (3) respectif présente une ouverture de passage (15) à travers laquelle le module de chauffage (3) pénètre dans le volume de commande (13) dans la direction longitudinale (4),
- dans lequel le dispositif de chauffage (1) présente un agencement conducteur électriquement conducteur (32) avec un rail (37) qui s'étend dans la direction transversale (5),
**caractérisé**
- **en ce que** le boîtier est un boîtier de commande électriquement conducteur (9),
- **en ce qu'**une électronique de puissance pour alimenter électriquement le module de chauffage (3) est agencée dans le volume de commande (13),
- **en ce que** les modules de chauffage (3) dans le volume de commande (13) sont connectés électriquement à l'électronique de puissance,
- **en ce que** l'agencement conducteur électriquement conducteur (32) connecte électriquement la coque externe (7) respective au boîtier (9),
- **en ce que** le rail (37) est espacé des coques externes (7),
- **en ce que** le rail (37) est connecté électriquement et mécaniquement au fond (14),
- **en ce que** l'agencement conducteur (32) pour la coque externe (7) respective comprend au moins un bras (38) associé qui fait saillie à partir du rail et est connecté électriquement et mécaniquement à la coque externe (7) associée.

2. Dispositif de chauffage selon la revendication 1,
**caractérisé**
**en ce qu'**au moins l'un des bras (38) est conçu sous la forme d'un élément ressort (39) qui est chargé mécaniquement contre la coque externe (7) associée.

3. Dispositif de chauffage selon la revendication 1 ou 2,
**caractérisé**
**en ce qu'**au moins l'un des bras (38) est agencé, en particulier en appui, sur une paroi latérale externe (31) associée de la coque externe (7) et est connecté électriquement à la paroi latérale (31).

4. Dispositif de chauffage selon la revendication 3,
**caractérisé**
**en ce que** la paroi latérale (31) présente un congé (42) faisant saillie dans la direction verticale (30) et s'étendant dans la direction longitudinale (4), et en ce que le bras (38) présente une formation (43) complémentaire au congé (42), de telle sorte que le congé (42) vienne en prise dans la formation (43).

5. Dispositif de chauffage selon l'une quelconque des revendications 1 à 4,
**caractérisé**
- **en ce qu'**au moins l'un des bras (38) présente un segment de support (45) s'étendant dans la direction longitudinale (4) et un segment de connexion (46) connectant le segment de support (45) au rail (37),
- **en ce que** le segment de support (45) est en appui sur une paroi externe (29) associée de la coque externe (7) correspondante,
- **en ce que** la partie de connexion (46) s'étend de manière inclinée par rapport à la direction transversale (5) dans la direction de la paroi externe (29) associée et charge ainsi mécaniquement la partie de support (45) dans la direction transversale (5) contre le paroi externe (29) associée.

6. Dispositif de chauffage selon la revendication 5,
**caractérisé**
**en ce que** l'agencement conducteur (32) comprend un tel bras (38) pour chacune des deux parois externes (29) d'au moins l'une des coques externes (7).

7. Dispositif de chauffage selon la revendication 5 ou 6,
**caractérisé**
**en ce que** le segment de support (45) est espacé transversalement par rapport à la direction longitudinale (4) et transversalement par rapport à la direction transversale (5) à partir du rail (37).

8. Dispositif de chauffage selon l'une quelconque des revendications 5 à 7,
**caractérisé**
**en ce qu'**au moins l'un des bras (38) présente, du côté du segment de support (45) orienté à l'opposé du rail (37), une languette (47) qui est courbée vers l'extérieur par rapport à la paroi externe (29) associée.

9. Dispositif de chauffage selon l'une quelconque des revendications 1 à 8,
**caractérisé**
**en ce que** l'agencement conducteur (32) est agencé dans le volume de chauffage (10) et connecte électriquement la coque externe (7) respective dans le volume de chauffage (10) au fond (14) pour connecter électriquement la coque externe (7) respective à la partie de boîtier (9).

10. Dispositif de chauffage selon l'une quelconque des revendications 1 à 9,
**caractérisé**
**en ce que** dans l'ouverture de passage (15) respective, un agencement d'étanchéité isolant (16) assure l'étanchéité aux fluides du volume de commande (13) par rapport au volume de chauffage (10).

11. Dispositif de chauffage selon l'une quelconque des revendications 1 à 10,
**caractérisé**
**en ce qu'**au moins l'un des bras (38) est revêtu d'un matériau résistant au frottement et conducteur, en particulier d'argent, sur son côté orienté vers la coque externe (7) associée.

12. Dispositif de chauffage selon l'une quelconque des revendications 1 à 11,
**caractérisé**
**en ce que** l'agencement conducteur (32) comprend au moins un élément de cosse (48) qui fait saillie à partir du rail (37) et est chargé mécaniquement contre le fond (14), de telle sorte qu'au moins l'un des au moins un bras (38) soit chargé mécaniquement contre la coque externe (7) associée.

13. Dispositif de chauffage selon l'une quelconque des revendications 1 à 12,
**caractérisé**
**en ce que** l'agencement conducteur (32) est une partie monobloc, en particulier une partie en tôle.

14. Véhicule à moteur (35) équipé d'un dispositif de chauffage (1) selon l'une quelconque des revendications précédentes, dans lequel le boîtier de commande (9), en particulier la première partie de boîtier (11), est agencé pour être connecté électriquement à une masse électrique (33) du véhicule à moteur (35).
